# EUROPÄISCHE PATENTSCHRIFT

(11) **EP 0 776 138 B1**
(45) Veröffentlichungstag und Bekanntmachung des Hinweises auf die Patenterteilung: **27.01.1999**
(21) Anmeldenummer: 96118136.9
(22) Anmeldetag: 12.11.1996
(51) Int. Cl.: H04Q 7/30, H04Q 7/26, H04B 7/26

(54) **Übertragungssystem zwischen Zentralstelle und Basisstationen**
Transmission system between central and base stations
Système de transmission entre centrale et stations de base

(30) Priorität: 23.11.1995 DE 19543841
(43) Veröffentlichungstag der Anmeldung: 28.05.1997
(73) Patentinhaber: SIEMENS AKTIENGESELLSCHAFT, 80333 München (DE)
(72) Erfinder: Alger-Meunier, Michael, Dr., 85540 Haar (DE); Ammar, Yousif, Dr., 81675 München (DE)

(56) Entgegenhaltungen:
- EP-A- 0 671 825
- DE-A- 4 333 000

## Beschreibung

Die Erfindung betrifft ein Übertragungssystem mit einer Zentralstelle, die mit einer Gegenstelle verbunden ist, und mit mindestens zwei über mindestens eine Schnittstelle an die Zentralstelle angeschlossenen Basisstationen, die drahtlos mit mindestens einer mobilen Endstelle Signale austauschen, wobei von der Gegenstelle abgegebene Signale über die Zentralstelle und die Basisstationen an die Endstelle und von der Endstelle abgegebene Signale über die Basisstationen und die Zentralstelle an die Gegenstelle übermittelt werden.

Heutige Architekturen privater Nebenstellenanlagen erlauben den Anschluß von Basisstationen nach DECT-Standard (DECT = Digital European Cordless Telephone) mittels einer digitalen Schnittstelle nach verschiedenen Verfahren mit konstanter oder vernachlässigbarer Laufzeit wie zum Beispiel nach Upn-Standard an die Zentralstelle. Voraussetzung dafür ist, daß beim Übergang der mobilen Endstelle von einer Basisstation zu einer anderen während des Gesprächs der Datenfluß an allen Basisstationen synchron ist. Synchron heißt in diesem Zusammenhang, daß die Daten, die in einem Rahmen nach DECT-Standard von der Zentralstelle über verschiedene Schnittstellen an verschiedene Basisstationen gesendet werden, in der Luft einander gegenüber mit einem zeitlichen Versatz von weniger als 4µs erscheinen.

Um diese Synchronität herzustellen, wird beispielsweise über die Schnittstellen nach Upn-Standard ein vom Rahmentakt nach DECT-Standard getriggerter Synchronisierungsimpuls mit einer bestimmten Verzögerung zu den Basisstationen übertragen. Bei der Schnittstelle nach Upn-Standard ist dazu ein sogenanntes T-Bit vorgesehen. Die Übertragung des T-Bits ist mit einer IOM- Schnittstelle zeitlich in bestimmter Weise fest gekoppelt. Dadurch wird die Übertragung des T-Bits über mehrere Schnittstellen nach Upn-Standard, die mit der IOM-Schnittstelle verbunden sind, ermöglicht. Das bedeutet wiederum, daß diese Basisstationen synchron starten. Eine derartige Realisierung ist z. Bsp. in der DE-A- 4 333 000 offenbart.

Nachteilig ist bei den Schnittstellen nach Upn-Standard jedoch die verhältnismäßig kurze Reichweite. Schnittstellen nach Uko-Standard beispielsweise erlauben demgegenüber einen zehnmal größeren Abstand zwischen Zentralstelle und Basisstation. Schnittstellen nach Uko-Standard weisen aber weder ein T-Bit noch einen definierten zeitlichen Zusammenhang mit der IOM-Schnittstelle bei der Übertragung auf.

Aufgabe der Erfindung ist es, ein Übertragungssystem der eingangs genannten Art bereitzustellen, das einen größeren Abstand zwischen der Zentralstelle und den Basisstationen zuläßt.

Die Aufgabe wird durch ein Übertragungssystem gemäß Patentanspruch 1 gelöst.

Ausgestaltungen und Weiterbildungen des Erfindungsgedankens sind Gegenstand von Unteransprüchen.

Die Erfindung ermöglicht es, Schnittstellen nach Uko-Standard neben anderen Schnittstellen wie beispielsweise solchen nach Upn-Standard, jedoch mit größerer Reichweite einzusetzen, wobei ein synchroner Betrieb mit den anderen Schnittstellen gewährleistet wird.

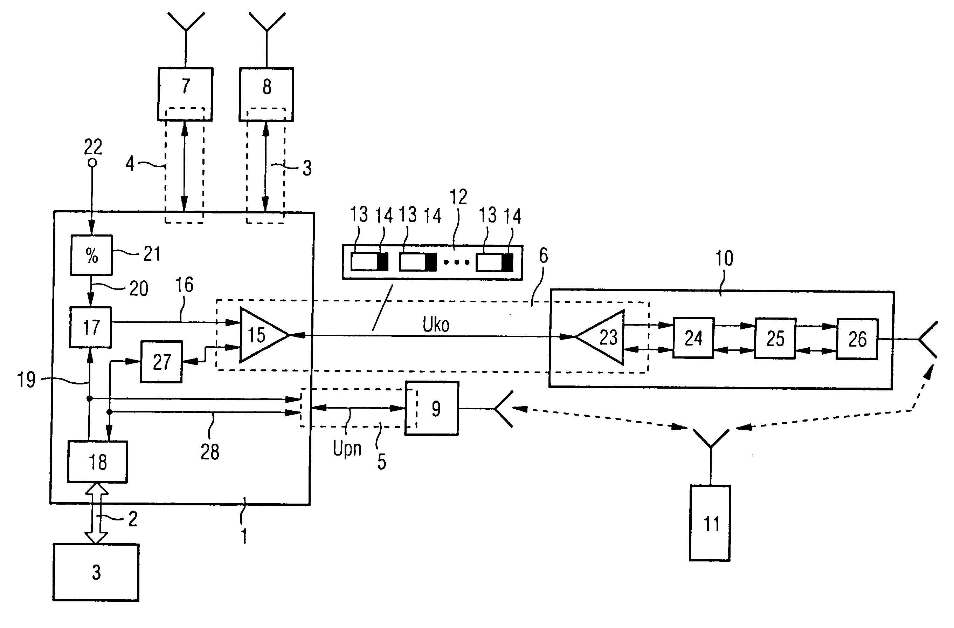

Die Erfindung wird nachfolgend anhand des in der einzigen Figur der Zeichnung dargestellten Ausführungsbeispiels näher erläutert.

Das als Ausführungsbeispiel gezeigte Übertragungssystem enthält eine Zentralstelle 1, wie beispielsweise die Zentraleinheit einer privaten Nebenstellenanlage, und eine mit dieser beispielsweise über einen PCM-Bus 2 verbundene Gegenstelle 3. An die Zentralstelle 1 sind darüber hinaus über jeweils eine Schnittstelle 3, 4, 5, 6 Basisstationen 7, 8, 9, 10 angeschlossen. Die Basisstationen 7, 8, 9, 10 können mit einer mobilen Endstelle 11 drahtlos Signale austauschen.

Beim vorliegenden Ausführungsbeispiel kommuniziert die mobile Endstelle 11 mit den Basisstationen 9 und 10. In gleicher Weise ist aber auch eine Kommunikation mit den anderen Basisstationen 7 und 8 sowie der Einsatz weiterer mobiler Endstellen möglich. Über den PCM-Bus 2, die Zentralstelle 1 und die Schnittstellen 5 und 6 in Verbindung mit den jeweiligen Basisstationen 9 und 10 sowie deren drahtlose Verbindung zur mobilen Endstelle 11 ermöglichen einen Nachrichtenaustausch zwischen der Gegenstelle 3 und der mobilen Endstelle 11.

Erfindungsgemäß ist die Schnittstelle 6 als Uko-Schnittstelle ausgeführt, bei der Mittel zum Übertragen von Synchronisiersignalen, Mittel zum Verzögern dieser Synchronisiersignale und Mittel zum Verzögern der zu übertragenden Datenströme vorgesehen sind. Das Übertragen und Verzögern der Synchronisiersignale sowie das Verzögern der Datenströme erfolgt dabei derart, daß die über die Uko-Schnittstelle 6 angeschlossene Basisstation 10 in gleicher Weise wie die übrigen Basisstationen 7, 8 und 9 fest mit der Zentralstelle 1 zeitlich gekoppelt sind, d. h. synchron zu diesen senden und empfangen. Bei der Schnittstelle 5 handelt es sich beispielsweise um eine Upn-Schnittstelle. Die Schnittstellen 3 und 4 können dabei in beliebiger Weise entweder mit der Upn-Schnittstelle 5 oder der Uko-Schnittstelle 6 identisch sein.

Da auf der Uko-Schnittstelle 6 kein geeignetes Bit frei ist, um die Synchronisiersignale zu übertragen, wird als Mittel zum Übertragen der Synchronisiersignale der eingebettete Arbeitskanal (EOC = Embedded Operation Channel) benutzt und auf diesem Synchronisiersignale bildende EOC-Meldungen von der Zentralstelle 1 an die Basisstation 10 gesendet.

Die Struktur der Uko-Schnittstelle für 2B1QDSL (s. ANSI T1E1, 4/92-004) sieht einen 12 ms Superrahmen 12 vor, der wiederum aus 8 untergeordneten Basisrahmen 13 besteht. Der EOC-Kanal 14 wird durch jeweils die letzten vier Bits eines Basisrahmens 13 gebildet. Eine Rücksetzeinrichtung setzt Basis- und Superrahmen bei Auftreten eines Synchronisiersignals definiert zurück. Das Rücksetzen erfolgt mittels einer Transceivereinheit 15 der Uko-Schnittstelle 6 in der Zentralstelle 1. Dabei wird durch die Transceivereinheit 15 jeweils nach Auftreten eines Synchronisiersignals der nächste Basisrahmen 13 bzw. der nächste Superrahmen 12 abgesendet. Die Synchronisiersignale 16 werden von einer Verzögerungseinrichtung 17 bereitgestellt, die wiederum von einer IOM-Schnittstelle 18 einen Monitorbefehl 19 erhält und diesen solange zwischenspeichert, bis beispielsweise die nächste fallende Flanke eines Mastertakts 20 auftritt. Erst zu diesem Zeitpunkt wird der Monitorbefehl 19 als Synchronisiersignal 16 an die Transceivereinheit 15 weitergegeben. Der Mastertakt 20 wird dabei mittels einer Frequenzteilereinheit 21 aus dem Systemtakt 22 des Übertragungssystems gewonnen. Folglich wird das Rahmensignal in einem festen zeitlichen Bezug zum Mastertakt 20 übertragen.

Die über die Uko-Schnittstelle 6 an die Zentralstelle 1 angeschlossene Basisstation 10 enthält neben einem Transceiver 23 als Abschluß der Uko-Schnittstelle 6 eine Verzögerungseinrichtung 24 zum Verzögern des Datenstroms in Empfangsrichtung oder in beide Richtungen sowie eine Umcodiereinrichtung 25, die mit einer Sende-Empfangs-Einrichtung 26 zur drahtlosen Übertragung von Signalen zur bzw. von der mobilen Endstelle 11 verbunden ist. Die Umcodiereinrichtung 25 setzt dabei Signale für die Sende-Empfangs-Einrichtung 26 so um, daß diese der Form der Basisstation 9 entsprechen. Ebenso werden durch die Umcodiereinrichtung 25 von der Sende-Empfangs-Einrichtung 26 erhaltene Signale für die Übertragung über die Uko-Schnittstelle 6 aufbereitet. Die Verzögerungseinrichtung 24 dient dazu, die Signallaufzeit der Upn-Schnittstelle 5 von mindestens 4 µs und einer zusätzlichen leitungslängenabhängigen Laufzeit auszugleichen. Der entsprechende Laufzeitausgleich für das Synchronisiersignal wird bereits durch die Verzögerungseinrichtung 17 mit gewährleistet.

Die zu übertragenden Datenströme werden in der Zentralstelle 1 durch die IOM-Schnittstelle 18 bereitgestellt und der Transceivereinheit 15 der Uko-Schnittstelle 6 mittels einer Umcodiereinrichtung 27 zur Umsetzung der IOM-Codierung in die Uko-Codierung und umgekehrt bereitgestellt. Der Datenstrom 28 sowie der Monitorbefehl 19 werden der Upn-Schnittstelle 5 direkt zugeführt. Die Basisstationen 7 und 8 sowie die zugehörige Beschaltung in der Zentralstelle 1 sind je nach dem, ob ihre Schnittstellen 3 und 4 nach Uko-Standard oder Upn-Standard ausgeführt sind, jeweils identisch zur Basisstation 9 bzw. 10.

## Patentansprüche

1. Übertragungssystem mit einer Zentralstelle (1), die mit einer Gegenstelle (3) verbunden ist, und mit mindestens zwei über jeweils eine Schnittstelle (3, 4, 5, 6) an die Zentralstelle (1) angeschlossenen Basisstationen (7, 8, 9, 10), die drahtlos mit mindestens einer mobilen Endstelle (11) Signale austauschen, wobei von der Gegenstelle (3) abgegebene Signale über die Zentralstelle (1) und die Basisstationen (7, 8, 9, 10) an die mobile Endstelle (11) und von der mobilen Endstelle (11) abgegebene Signale über die Basisstationen (7, 8, 9, 10) und die Zentralstelle (1) an die Gegenstelle (3) übermittelt werden,
**gekennzeichnet durch** mindestens eine zwischen die Zentralstelle (1) und eine der Basisstationen (7, 8, 9, 10) geschaltete Schnittstelle (6) nach Uko-Standard, Mittel (14) zum Übertragen von Synchronisiersignalen (16) über die Schnittstelle(n) (6) nach Uko-Standard und Mittel (17, 24) zum Verzögern der Synchronisiersignale (16) und von zu übertragenden Datenströmen (28) derart, daß die über die Schnittstelle(n) (6) nach Uko-Standard angeschlossene(n) Basisstation(en) (6) in gleicher Weise wie die übrigen Basisstaionen (7, 8, 9) fest mit der Zentralstelle (1) zeitlich gekoppelt sind.

2. Übertragungssystem nach Anspruch 1,
**dadurch gekennzeichnet**,
daß die Synchronisiersignale (16) als mittels eines eingebetteten Arbeitskanals (14) der Schnittstelle(n) (6) nach Uko-Standard übertragene EOC-Meldungen von der Zentralstelle (1) an die über die Schnittstelle(n) (6) nach Uko-Standard angeschlossene(n) Basisstation(en) (10) gesendet werden.

3. Übertragungssystem nach Anspruch 1 oder 2,
**dadurch gekennzeichnet**,
daß die Übertragungsstruktur einer Schnittstelle (6) nach Uko-Standard einen aus mehreren untergeordneten Basisrahmen (13) bestehenden Superrahmen (12) vorsieht und daß eine Rücksetzeinrichtung (15) bei Auftreten von Synchronisiersignalen (16) Basis- und Superrahmen (13, 12) definiert zurücksetzt.

4. Übertragungssystem nach einem der vorherigen Ansprüche,
**dadurch gekennzeichnet**,
daß ein Mastertakt (20) aus dem Übertragungssystemtakt (22) hergeleitet wird, der die Mittel (17) zum Verzögern der Synchronisiersignale (16) steuert.

5. Übertragungssystem nach einem der vorherigen Ansprüche,
**dadurch gekennzeichnet**,
daß die Zentralstelle (1) eine IOM-Schnittstelle (18) aufweist und daß die Synchronisiersignale (16) von der IOM-Schnittstelle (18) bereitgestellt werden.

6. Übertragungssystem nach Anspruch 5,
**dadurch gekennzeichnet**,
daß als Synchronisiersignale (16) Monitorbefehle (19) der IOM-Schnittstelle die als EOC-Meldungen an die über die Schnittstelle (6) nach Uko-Standard angeschlossene(n) Basisstation(en) (10) gesendet werden, vorgesehen sind.

7. Übertragungssystem nach Anspruch 6,
**dadurch gekennzeichnet**,
daß als Mittel zum Verzögern des Synchronisiersignals eine Verzögerungseinrichtung (17) vorgesehen ist, die die EOC-Meldungen nach einem entsprechenden Monitorbefehl (19) der IOM-Schnittstelle (18) bis zu einer Flanke eines Mastertaktes (20) verzögert.

8. Übertragungssystem nach einem der vorherigen Ansprüche
**dadurch gekennzeichnet**,
daß eine Umcodiereinrichtung (25) in der Basisstation vorgesehen ist, die über die Schnittstelle (6) nach Uko-Standard empfangene Meldungen auf IOM-Standard umsetzt.

## Claims

1. Transmission system having a central station (1) which is connected to an opposite station (3), and having at least two base stations (7, 8, 9, 10) which are connected via in each case one interface (3, 4, 5, 6) to the central station (1) and which exchange signals in a wire-free fashion with at least one mobile terminal station (11), signals emitted by the opposite station (3) being sent to the mobile terminal station (11) via the central station (1) and the base stations (7, 8, 9, 10), and signals emitted by the mobile terminal station (11) being sent to the opposite station (3) via the base station (7, 8, 9, 10) and the central station (1), characterized by at least one interface (6), according to the Uk0 standard, which is connected between the central station (1) and one of the base stations (7, 8, 9, 10), means (14) for transmitting synchronization signals (16) via the interface or interfaces (6) according to the Uk0 standard and means (17, 24) for delaying the synchronization signals (16) and data streams (28), to be transmitted, in such a way that the base station or base stations (6) which are connected via the interface or interfaces (6) according to the Uk0 standard are permanently coupled to the central station (1) in terms of their timing in the same way as the other base stations (7, 8, 9).

2. Transmission system according to Claim 1, characterized in that the synchronization signals (16) are sent, as EOC messages transmitted by means of an embedded working channel (14) of the interface or interfaces (6) according to the Uk0 standard, from the central station (1) to the base station or base stations (10) which are connected via the interface or interfaces (6) according to the Uk0 standard.

3. Transmission system according to Claim 1 or 2, characterized in that the transmission structure of an interface (6) according to the Uk0 standard provides a superframe (12) composed of a plurality of subordinate base frames, and in that a resetting device (15) resets the base frame and superframe (13, 12) in a defined fashion when synchronization signals (16) occur.

4. Transmission system according to one of the preceding claims, characterized in that a master clock (20) is derived from the transmission system clock (22) and controls the means (17) for delaying the synchronization signals (16).

5. Transmission system according to one of the preceding claims, characterized in that the central station (1) has an IOM interface (18), and in that the synchronization signals (16) are made available by the IOM interface (18).

6. Transmission system according to Claim 5, characterized in that monitor instructions (19) of the IOM interface which are sent as EOC messages to the base station or base stations (10) which are connected via the interface (6) according to the Uk0 standard are provided as synchronization signals (16).

7. Transmission system according to Claim 6, characterized in that a delay device (17) which, after a corresponding monitor instruction (19) of the IOM interface (18), delays the EOC messages up to an edge of a master clock pulse (20) is provided as means for delaying the synchronization signal.

8. Transmission system according to one of the preceding claims, characterized in that a recoding device (25) which converts messages received via the interface (6) according to the Uk0 standard to the IOM standard is provided in the base station.

## Revendications

1. Système de transmission comportant un poste (1) central qui est relié à un poste (3) correspondant et comportant au moins deux stations (7, 8, 9, 10) de base qui sont raccordées au poste (1) central chacune par l'intermédiaire d'une interface (3, 4, 5, 6) et qui échangent sans fil des signaux avec au moins un terminal (11) mobile, des signaux fournis par le poste (3) correspondant étant transmis au terminal (11) mobile par l'intermédiaire du poste (1) central et des stations (7, 8, 9, 10) de base et des signaux fournis par le terminal (11) mobile étant transmis au poste (3) correspondant par l'intermédiaire des stations (7, 8, 9, 10) de base et du poste (1) central, caractérisé par au moins une interface (6) suivant la norme Uko, connectée entre le poste (1) central et l'une des stations (7, 8, 9, 10) de base, par des moyens (14) pour transmettre des signaux (16) de synchronisation par l'intermédiaire de l'interface (6) ou des interfaces (6) suivant la norme Uko et par des moyens (17, 24) pour retarder les signaux (16) de synchronisation et des flux (28) de données à transmettre, de telle manière que la station (6) de base ou les stations (6) de base raccordée(s) par l'intermédiaire de l'interface (6) ou des interfaces (6) suivant la norme Uko sont couplées dans le temps de manière fixe au poste (1) central de la même façon que les stations (7, 8, 9) de base restantes.

2. Système de transmission suivant la revendication 1, caractérisé en ce que les signaux (16) de synchronisation sont envoyés, comme signalisations EOC transmises au moyen d'un canal (14) de travail incorporé de l'interface (6) ou des interfaces (6) suivant la norme Uko, du poste (1) central à la station (10) de base ou aux stations (10) de base raccordée(s) par l'intermédiaire de l'interface (6) ou des interfaces (6) suivant la norme Uko.

3. Système de transmission suivant la revendication 1 ou 2, caractérisé en ce que la structure de transmission d'une interface (6) suivant la norme Uko prévoit une supertrame (12) constituée de plusieurs trames (13) de base subordonnées et en ce qu'un dispositif (15) de remise à l'état initial remet à l'état initial, de manière définie, les trames (13) de base et la supertrame (12) lorsqu'apparaissent des signaux (16) de synchronisation.

4. Système de transmission suivant l'une des revendications précédentes, caractérisé en ce qu'une cadence (20) maître est dérivée de la cadence (22) du système de transmission, cette cadence (20) maître commandant les moyens (17) pour retarder les signaux (16) de synchronisation.

5. Système de transmission suivant l'une des revendications précédentes, caractérisé en ce que le poste (1) central comporte une interface (18) IOM et en ce que les signaux (16) de synchronisation sont mis à disposition par l'interface (18) IOM.

6. Système de transmission suivant la revendication 5, caractérisé en ce qu'il est prévu comme signaux (16) de synchronisation des instructions (19) de contrôle de l'interface IOM qui sont envoyées comme signalisations EOC à la station (10) de base ou aux stations (10) de base raccordée(s) par l'intermédiaire de l'interface (6) suivant la norme Uko.

7. Système de transmission suivant la revendication 6, caractérisé en ce qu'il est prévu comme moyen pour retarder le signal de synchronisation un dispositif (17) de temporisation qui retarde les signalisations EOC, après une instruction (19) de contrôle correspondante de l'interface (18) IOM, jusqu'à un flanc d'une cadence (20) maître.

8. Système de transmission suivant l'une des revendications précédentes, caractérisé en ce qu'il est prévu dans la station de base un dispositif (25) de décodage qui fait la conversion à la norme IOM de signalisations reçues par l'intermédiaire de l'interface (6) suivant la norme Uko.
